(19) Europäisches Patentamt
European Patent Office
Office européen des brevets

(11) **EP 4 760 353 A1**

(12) **EUROPEAN PATENT APPLICATION**

(43) Date of publication:
**17.06.2026 Bulletin 2026/25**

(21) Application number: **25220829.3**

(22) Date of filing: **04.12.2025**

(51) International Patent Classification (IPC):
**G01S 17/42** (2006.01)   **G01S 17/48** (2006.01)
**G01S 17/89** (2020.01)   **H04N 13/239** (2018.01)
**H04N 13/243** (2018.01)   **H04N 25/47** (2023.01)

(52) Cooperative Patent Classification (CPC):
**G01S 17/48; G01S 17/42; G01S 17/89;
H04N 13/239; H04N 13/243**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **12.12.2024 SE 2430658**

(71) Applicant: **Terranet Tech AB
223 62 Lund (SE)**

(72) Inventors:
• **WIMAN, Joshua
22464 Lund (SE)**
• **CHENG, Shirui
22653 Lund (SE)**

(74) Representative: **Neij & Lindberg AB
Pedellgatan 11
224 60 Lund (SE)**

(54) **OBJECT DETECTION BY USE OF EVENT-BASED SENSORS**

(57)    For detection of objects in a detection space defined by three space coordinates, a scanning arrangement is operated to sweep light beam(s) in the detection space and event-based sensors are operated to detect scattered light from the detection space. A processing arrangement (60) operates to process an event stream (ES1, ES2) from the respective event-based sensor into an ensemble of two-dimensional, 2D, trajectories ([CT1], [CT2]) that each represents a continuous movement of scattered light on the event-based sensor, and to determine, based on corresponding 2D trajectories between the event-based sensors, a set of 3D trajectories ([ST]) in the detection space, with each 3D trajectory being defined by a parametric polynomial function of time for each of the space coordinates. The processing arrangement (60) further forms an input dataset comprising the set of 3D trajectories and operates an object recognition algorithm (63a) on the input dataset for detection of the objects.

**EP 4 760 353 A1**

FIG. 2

**Description**

Technical Field

The present disclosure relates to data processing in relation to imaging systems, in particular imaging systems that comprise event-based sensors arranged to receive photons reflected or scattered by a region on an object when illuminated by a scanning light beam.

Background

Image sensors in conventional digital cameras capture two-dimensional (2D) digital images that represent the incident photons on individual pixels of a 2D pixel array within an exposure time period. The number of pixels in the pixel array may be large, resulting in a high computational load for processing of the digital images.

Three-dimensional (3D) image-based positioning conventionally uses a plurality of digital cameras, which are arranged to view a scene from different angles. The digital cameras are operated in synchronization to capture a respective time sequence of digital images. A time sequence of 3D representations of any object located in the scene is generated by processing concurrent digital images from different digital cameras by triangulation. This image-by-image processing is processing intensive and difficult to perform in real time, at least if computational resources are limited.

To mitigate these problems, US10261183 proposes a different type of system for 3D positioning. The system includes a transmitter configured to scan a light beam across the scene, and a plurality of digital cameras arranged to view the scene from different angles. As the light beam hits a voxel on an object in the scene, photons are reflected or scattered off the object. Some of these photons impinge on the pixel array of the respective digital camera and produce a local signal increase. Based on the location of the local signal increase on each pixel array, a 3D position of the illuminated voxel may be determined by triangulation. As the light beam scans the object, the resulting 3D positions may be compiled into a 3D representation of the object. This technique significantly reduces the amount of image data that needs to be processed for 3D positioning, in particular if the digital cameras are so-called event cameras. In an event camera, each pixel operates independently and asynchronously to report a change in brightness as it occurs, and staying silent otherwise. Each activation of a pixel forms an event. The event camera outputs a continuous stream of such events, where each event may be represented by an identifier of the activated pixel and a timestamp of its activation.

The events from an event sensor defines a point cloud that moves over time as one or more light beams are scanned in the space that is viewed by the event camera. In a practical situation, the scene does not only include a single object of interest. Other objects in the scene will also reflect the scanned light and be represented by the point cloud. It is therefore a challenging task to detect one or more objects of interest based on the output signals from event cameras, especially if the object detection is to be executed on resource constrained systems and/or if the object detection is time-constrained.

Summary

It is an objective to at least partly overcome one or more limitations of the prior art.

It is also an objective to provide an efficient technique of performing object detection based on event data from an event-based sensor.

One or more of these objectives, as well as further objectives that may appear from the description below, are at least partly achieved by a computer-implemented method of detecting objects in a detection space, a computer-readable medium and a system according to the independent claims, embodiments thereof being defined by the dependent claims.

The present disclosure proposes a processing-efficient technique for detecting objects in a detection space monitored by event-based sensors. The technique involves a step-wise and structured data reduction that provides processing efficiency. A first data reduction and structuring involves organizing data streams of events from the event-based sensors into 2D trajectories, for each event-based sensor separately. A second data reduction and structuring involves converting the 2D trajectories into 3D trajectories. A third data reduction and structuring involves generating the 3D trajectories to be represented by a parametric polynomial function of time for each of the space coordinates. A set of 3D trajectories is then supplied, as an input dataset, to an object recognition algorithm which is configured for object detection, for example by machine learning. The functional representation of the 3D trajectories, compared to processing raw data in the form of point clouds, will enable use of a simpler object recognition algorithm and has been found to improve the performance of the object recognition algorithm in terms of processing efficiency and detection reliability.

Still other objectives and aspects, as well as features, embodiments and technical effects will appear from the following detailed description, the attached claims, and the drawings.

Brief Description of Drawings

FIG. 1A is a schematic view of an example object detection system operating by scanning illumination and event detection, FIG. 1B is a block diagram of an example stream of events generated by an event-based sensor, FIG. 1C is a block diagram of an example illumination system as used in an object detection system, and FIG. 1D is a top plan view of an example arrangement of an illumination system and event-based sensors.

FIG. 2 is a block diagram of an example object detection system.

FIG. 3 is a flow chart of an example method of operating an object detection system.

FIGS 4A-4B show generation of input data for an object recognition algorithm in accordance with examples of the method in FIG. 3.

FIG. 5 illustrates correspondence between 2D trajectories on two sensor arrays.

FIGS 6A-6B are flow charts of an example methods that may be performed as part of the method in FIG. 3.

FIG. 7 illustrates an adjustment procedure performed as part of the method in FIGS 6A-6B.

FIG. 8 is a flow chart of an example method for determining associated pairs of 2D trajectories.

FIG. 9 illustrates a spatial mapping performed as part of the method in FIG. 8.

FIG. 10 illustrates generation of a 3D trajectory from 2D trajectories.

FIG. 11 is a block diagram of a neural network for object detection.

FIG. 12A is a block diagram of a system for training of a machine learning-based model for use in an object detection system, and FIG. 12B is a flow chart of an example method performed by the system in FIG. 12A.

FIG. 13 is a block diagram of a machine that may implement methods disclosed herein.

Detailed Description of Example Embodiments

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements. Like numbers refer to like elements throughout.
Also, it will be understood that, where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more", even though the phrase "one or more" or "at least one" is also used herein. As used herein, except where the context requires otherwise owing to express language or necessary implication, the word "comprise" or variations such as "comprises" or "comprising" is used in an inclusive sense, that is, to specify the presence of the stated features but not to preclude the presence or addition of further features in various embodiments.
It will furthermore be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing the scope of the present disclosure. As used herein, the terms "multiple", "plural" and "plurality" are intended to imply provision of two or more elements, whereas the term "set" is intended imply provision of at least one element. The term "and/or" includes any and all combinations of one or more of the associated listed elements.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

As used herein, "event-based sensor" or "event sensor" refers to a sensor that responds to local changes in brightness. The sensor comprises light-sensitive elements ("pixels") that operate independently and asynchronously, by reporting changes in brightness as they occur, and staying silent otherwise. Thus, an event sensor outputs an asynchronous stream of events triggered by changes in scene illumination. The pixels may be arranged in an array that defines a light-sensitive surface. The light-sensitive surface may be one-dimensional (1D) or two-dimensional (2D). The pixels may be based on any suitable technology, including but not limited to active pixel sensor (APS), charge-coupled device (CCD), single photon avalanche detector (SPAD), complementary metal-oxide-semiconductor (CMOS), silicon photomultiplier (SiPM), photovoltaic cell, phototransistor, etc.

As used herein, "beam scanner" refers to a device capable of scanning or sweeping a beam of light in a one, two or three-dimensional pattern. The beam of light may or may not be collimated. The light may be time-continuous or pulsed. The light may, but need not, be essentially monochromatic.

As used herein, "light" refers to electromagnetic radiation within the portion of the electromagnetic spectrum that extends from approx. 10 nm to approx. 14 $\mu$m, comprising ultraviolet radiation, visible radiation, and infrared radiation.

As used herein, "trajectory" refers to a sequence of spatially and temporally coherent positions. The trajectory may be defined in a 2D coordinate system or a 3D coordinate system. A 2D trajectory may represent 2D positions of pixels in a coordinate system of a pixel array and correspond to a movement pattern of a light beam across an object. A 3D trajectory may represent 3D positions along the movement pattern of the light beam across the object.

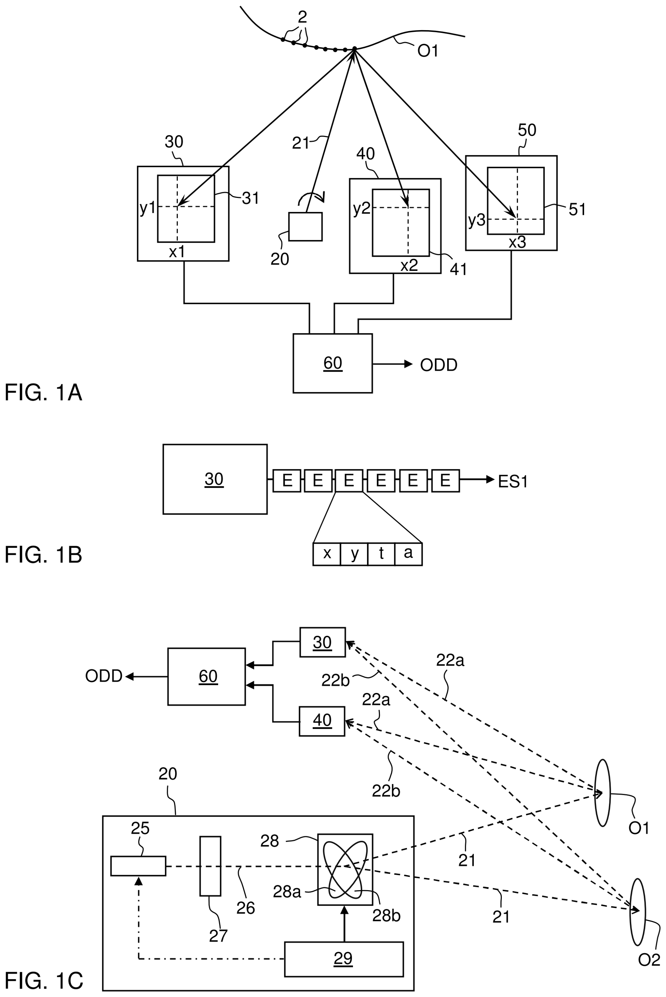

Embodiments relate to a processing-efficient and fast technique of processing a data stream of events generated by an event-based sensor, denoted "event sensor" or "event camera" in the following, where the events originate from one or more light beams scanned across a detection space that is viewed by the event sensor. Specifically, the technique aims at detecting, and possibly classifying, one or more objects in the scene. The technique involves generating three-dimensional (3D) trajectory data for input to an object recognition algorithm. For context, systems for illumination and detection will be described with reference to FIGS 1A-1D.

FIG. 1A is a schematic view of an object detection system comprising three event cameras 30, 40, 50 and a scanning arrangement 20. Each event camera 30, 40, 50 comprises a respective sensor array or pixel array 31, 41, 51 that defines a 2D array of light-sensitive elements ("pixels"). The sensor array is associated with a local coordinate system that defines a local position for each pixel ("pixel position"). The event cameras 30, 40, 50 have a respective field of view (FOV) facing a scene. The FOVs overlap at least partly and collectively define a detection space. Although not shown in FIG. 1A, each event camera 30, 40, 50 may comprise one or more optical components that define the FOV, such as optical lenses. The event cameras may also include optical filters.

The scanning arrangement 20, denoted beam scanner in the following, is configured to scan or sweep a beam of light 21 ("scanning beam") in the detection space in a predefined, random or pseudo-random pattern. The movement path of the scanning beam 21 may be specific to the beam scanner 20 or may be configurable and thus adjustable. For example, the beam scanner 20 may be operable to independently sweep the light beam 21 along two orthogonal axes. It is also conceivable for the sweeps along the two axes to be dependent on one another. The period of a sweep back and forth ("sweep period", corresponding to a "sweep frequency") may differ between the axes. In one non-limiting example, the sweep frequency along a horizontal axis may be in the range of 100-300 Hz, and the sweep frequency along a vertical axis may be in the range of 5-20 Hz. In some embodiments, the sweep speed along the respective axis varies as a sinusoid. Other functional dependencies of the sweep speed is conceivable, for example a triangle function, or a more square-like function. In some embodiments, the scanning beam 21 forms a Lissajous curve.

In the illustrated example, the detection space includes an object O1, which is illuminated by the scanning beam 21, which forms a moving spot of light on the object O1. The moving spot thereby sequentially illuminates regions 2 on the object O1. These regions 2, indicated as dark spots in FIG. 1A, are also denoted "scatter areas" herein, abbreviated SA. A scatter area 2 thus refers to a sampled surface element of an object. For each SA 2, one or more of the cameras (for example, two or three) detect photons reflected or otherwise scattered by that SA. In the illustrated example, reflected light from an SA is detected by a pixel at location (x1,y1) on sensor array 31, at location (x2,y2) on sensor array 41, and at location (x3,y3) on sensor array 51. Typically, in an event camera, an event is only generated when a pixel is "activated" by receiving light energy in excess of a predefined limit. As understood from FIG. 1A, reflected light from SAs 2 is captured or detected by one or more of the cameras 30, 40, 50, which output a respective stream of events comprising identifiers or addresses of the activated pixels. In some embodiments, each camera autonomously and asynchronously outputs an event whenever a pixel is detected to be illuminated by a sufficient number of photons.

FIG. 1B schematically illustrates a stream of events ("event stream") that may be output by an event camera 30. The event stream is designated by ES1, and each event is designated by E. In the examples presented herein, it is assumed that each event E comprises a pixel position on the pixel array (represented by camera coordinates x, y in FIG. 1B) and a time stamp of the activated pixel (represented by t in FIG. 1B). The pixel position is generally given as an identifier or address of the activated pixel, for example camera coordinates (as shown). The time stamp designates the time point of activation of the pixel and is set based on the output of a clock in the event camera. The time stamp may be given in any time unit. As indicated in FIG. 1B, the events E may include further data a, for example the level of illumination ("light intensity") received by the activated pixel.

In the examples herein, the event cameras are time correlated to the extent that there is a known correspondence between the time stamps generated by the different cameras. For example, the time correlation may be achieved by a synchronization signal that is distributed to and/or between the cameras at start-up of the object detection system, and possibly during its operation. In a variant, the time correlation may be achieved by the clocks in the cameras being synchronized upon detection of a reference event by the respective camera, for example resulting from a light pulse generated by the beam scanner 20.

The cameras 30, 40, 50 are connected, by wire or wirelessly, to a processing system 60, such as a computer device. The processing system 60 is configured to process the event streams from the cameras 30, 40, 50 for detection of the object O1 in the detection space. In some embodiments, the processing system 60 is configured to detect any object that forms a coherent shape of at least minimum extent in the detection scene. In some embodiments, the processing system 60 is configured to detect any object that stands out from a background in the detection scene. In some embodiments, the processing system 60 is configured to detect predefined objects. In some embodiments, the processing system 60 is configured to classify each detected object into one or more predefined classes or categories.

In some embodiments, the detected object is any or a specific animate object, such as a human or an animal, in the detection space. In some embodiments, the detected object is any or a specific object that moves in relation to the background in the detection space. In some embodiments, the detected object is any or a specific inanimate object, moving or not, in the detection space, such as a vehicle, a traffic light, a traffic sign, a building, a sidewalk, a road, "nature", etc. Of course, these embodiments may be combined.

The processing system 60 is configured to output object detection data, ODD, representing the detected object(s) within the detection space. The ODD may designate an extent of the object in the detection space, a location of the object in the detection space, a class of the object, a velocity of the object in the detection space, a velocity of the object relative to the detection system, or any combination thereof.

The object detection system in FIG. 1A may be stationary or moving. In some embodiments, the system is installed on a moving terrestrial, air-based or waterborne vehicle, and the resulting ODD is processed to observe a complex dynamic 3D scene lit up by the scanning beam(s). For example, such a 3D scene may be mapped in detail at high detection speed based on the ODD. For example, this type of information may be useful to systems for autonomous driving and driver assistance.

In some embodiments, the object detection system is configured to detect objects within a detection space that extends at least 30-60 meters from the event cameras.

The system in FIG. 1A is merely given as a non-limiting example. A larger number of event cameras may be used, for example to increase accuracy and/or introduce redundancy. Alternatively, a smaller number of event cameras may be used, for example to increase computation speed and/or reduce cost and complexity. Further, any number of beam scanners 20 may be used. Thus, more than one light beam 21 may be swept across the scene. It is also conceivable that a beam scanner 20 is configured to sweep more than one light beam across the scene. In some embodiments, the light beams are formed by laser light, which is thus coherent and highly collimated.

FIG. 1C shows an example beam scanner 20 of in an object detection system. In FIG. 1C, the object detection system includes two event cameras 30, 40. The detection space is illuminated by a scanned laser beam 21. In the illustrated example, reflected light 22a from a first object O1 and reflected light 22b from a second object O2 are received by the cameras 30, 40.

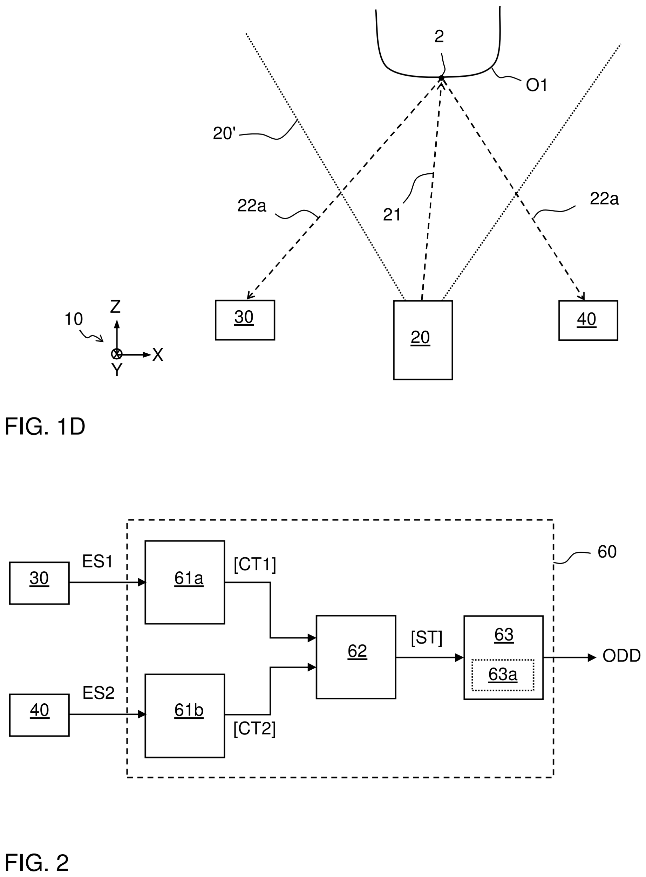

FIG. 1D is a top plan view of an example arrangement of the beam scanner 20 and the cameras 30, 40 in FIG. 1C and also illustrates momentary light paths 22a for reflected light from a region (scatter area, SA) 2 on the object O1 that is illuminated by the laser beam 21. As shown by dotted lines in FIG. 1D, the beam scanner 20 has a field of view (FOV) 20', which is given by the maximum solid angle within which the beam scanner 20 is operable to sweep the laser beam 21. The FOV 20' may be a subset of the detection space that is defined by the cameras 30, 40, or coincide with or be larger than the detection space.

As noted above, the detection space is defined collectively by the event cameras 30, 40. Positions in the detection space is defined by a reference coordinate system ("space coordinate system") 10, which is fixed relative to the cameras 30, 40. The reference coordinate system 10 is three-dimensional and defines each 3D position in the detection space by three coordinates ("space coordinates"). In the illustrated example, the space coordinates are Cartesian coordinates X, Y, Z. Any 3D coordinates may be used, for example polar, spherical or cylindrical coordinates.

Reverting to FIG. 1C, the beam scanner 20 includes a light source 25, which is configured to generate a beam of light ("light beam") 26. An optical system 27 may be arranged in the beam scanner 20 to re-shape and/or re-direct the light beam. The optical system 27 may include any type of optical component(s), such as lenses, prisms, mirrors, etc. A scanner unit 28 is arranged to receive the light beam 26 and deflect the light beam out of the beam scanner 20 at a series of different output angles. The scanner unit 28 thereby sweeps the light beam 26 at different angles to produce a scanning pattern.

The scanner unit 28 may be a standard component for 2D light scanning. In the illustrated example, the scanner unit 28 comprises two moveable mirrors 28a, 28b, which are operable to adjustably deflect the light beam in two orthogonal directions, for example along the X axis and the Y axis, respectively (FIG. 1D). Any number of mirrors may be used for the adjustable deflection, including a single mirror, for example a 2-axis mirror. In some embodiments, the scanner unit 28 includes one or more adjustable micromirrors, for example as part of a micro-electromechanical system (MEMS), in which the respective micromirror is controlled by applying a voltage between two electrodes around the micromirror. Such a MEMS-based scanner unit 28 may comprise a silicon device with a millimeter-sized mirror at its center. In variants, the moveable mirrors 28a, 28b are replaced or supplemented by one or more moveable lenses or prisms. In yet other variants, the scanner unit 14 deflects the light beam 26 by use of one or more acousto-optic or electro-optic deflectors. In a further variant, the scanner unit 28 comprises a phased array for generating and sweeping the light beam 26.

The light source 25 may include one or more solid-state laser devices, such as a laser diode, a VCSEL (vertical cavity surface-emitting laser), a DPSSL (diode-pumped solid-state laser), a silicon laser, etc. In some embodiments, the light source 25 is configured to emit IR light, for example in the range of 700-1000 nm. The light source 25 may provide light at a predefined frequency or range of frequencies. The light source 25 may be a pulsed laser. Such a pulsed laser may transmit light pulses at a pulse rate of 50-600 kHz, more particularly 100-400 kHz. The duration of the respective light pulse may be 2-10 ns. In a variant, the light source 25 is configured to transmit light continuously.

In the illustrated example, the beam scanner 20 further includes a scan controller 29, which is configured to provide one or more electrical signals to the scanner unit 28 to define the momentary direction of the light beam 21 that leaves the scanner unit 28. The scan controller 29 may be a dedicated hardware device or be implemented by computer software executed on a computer device. As indicated by a dot-dashed arrow, the scan controller 29 may also control the operation of the light source 25, for example the pulse rate, the pulse duration, or the output power of the light source.

As noted in the Background section, the task of detecting objects based on event data from event cameras is challenging, especially if it is constrained in time or by available processing resources. This is often the case in real-world implementations. For example, an object detection system may be installed on vehicle, for example an automotive car, and operated to supply ODD to a control system for the vehicle. For example, the control system may implement an Advanced Driver Assistance System (ADAS) that may assist or replace the driver in driving and parking functions. Here, the ODD needs to be generated and supplied in real time. For example, a required response time of the object detection system may be in the range of 10-100 ms. Given the huge amount of event data to be processed, there is a need for a processing-efficient technique. After significant effort, the present Applicant has developed a technique that is capable of meeting this need.

FIG. 2 is a block diagram of a processing system or arrangement 60 that implements this technique. In the illustrated example, the processing system 60 is connected to receive a first event stream ES1 from camera 30 and a second event stream ES2 from camera 40. Conceptually, the processing system 60 may be seen to include first modules or sub-systems 61a, 61b, which are configured to generate an ensemble or set of 2D trajectories [CT1], [CT2] from the respective event stream ES1, ES2. Each 2D trajectory represents a continuous movement of the scattered light on the respective event camera. The 2D trajectory is generated based on activated pixels on the pixel array. From FIGS 1A-1D, it is realized that each 2D trajectory corresponds to movement of a scanning beam across an object in the detection space. In other words, a 2D trajectory corresponds to a movement track of SAs 2 as viewed by the event camera. The 2D trajectories are also denoted "camera trajectories" herein and may be defined in the local coordinate system of the respective camera. The ensemble of 2D trajectories is also denoted "2D ensemble" herein.

The 2D trajectory comprises a 2D curve, which defines a movement pattern in the local coordinate system of the related camera. The 2D curve may be given as a sequence of camera coordinates at different time points. However, for processing and memory efficiency, 2D curve may be defined, for each of the two camera coordinates, by a parametric polynomial function that has time as independent variable. Thus, the function traces out the shape of the 2D curve in camera coordinates as a function of time, t. In Cartesian sensor coordinates $(x, y)$, the 2D curve may be given by functions $x(t)$ and y(t).

A parametric polynomial function $p(t)$ is a function that can be written in monomial form:

$$p(t) = c_0 + c_1 t + c_2 t^2 + \cdots + c_n t^n \tag{1}$$

with n being the degree of the polynomial. In some embodiments, the 2D curve has a degree of 2-4. Given in monomial form, the 2D curve is defined by the coefficients $[c_0, c_1, c_2, ..., c_n]$.

In some embodiments, the 2D trajectory comprises a start time, a duration, and a 2D curve, which is defined by two parametric polynomial functions ("camera coordinate functions"), one for each camera coordinate. In Cartesian coordinates, the camera coordinate functions may be compactly represented in matrix notation as $P_c = C_c \cdot t$, with

$$P_c = \begin{bmatrix} x \\ y \end{bmatrix}, \; C_c = \begin{bmatrix} c_{x,0} & c_{x,1} & \cdots & c_{x,n} \\ c_{y,0} & c_{y,1} & \cdots & c_{y,n} \end{bmatrix}, \; t = \begin{bmatrix} 1 \\ t \\ \vdots \\ t^n \end{bmatrix} \qquad (2)$$

When entered into the camera coordinate functions, the starts time yields a start position of the 2D trajectory. The duration is indicative of an end time. When entered into the camera coordinate functions, the end time yields an end position of the 2D trajectory. In a variant, the end time is explicitly included in the 2D trajectory, instead of or in addition to the duration. The use of camera coordinate functions provides a compact representation of the 2D trajectory and allows the 2D trajectory to be recreated at any desired time resolution and within any time segment. It is realized that the 2D curve is unambiguously defined by the coefficients in $C_c$ ("2D coefficients").

In FIG. 2, the processing system 60 further includes a second module or sub-system 62, which is configured to receive and jointly process the 2D ensembles [CT1], [CT2] into an ensemble or set of 3D trajectories, [ST], also denoted "3D ensemble" herein. Each 3D trajectory represents a contour of an object that has scattered light onto the event cameras 30, 40. The 3D trajectories are also denoted "space trajectories" herein and may be defined in the reference coordinate system 10 (FIG. 1D). In the present disclosure, the 3D trajectories are defined, for each of three space coordinates in the detection space, by a parametric polynomial function that has time as independent variable. In Cartesian space coordinates $(X, Y, Z)$, the 3D curve may be given by functions $X(t)$, $Y(t)$ and $Z(t)$.

In some embodiments, the 3D trajectory comprises a start time, a duration, and the 3D curve, which is defined by three parametric polynomial functions ("space coordinate functions"), one for each space coordinate. In a variant, the end time is explicitly included in the 3D trajectory, instead of or in addition to the duration. In Cartesian coordinates, the space coordinate functions may be compactly represented in matrix notation as $P_s = C_s \cdot t$, with

$$P_s = \begin{bmatrix} X \\ Y \\ Z \end{bmatrix}, \; C_s = \begin{bmatrix} c_{X,0} & c_{X,1} & \cdots & c_{X,m} \\ c_{Y,0} & c_{Y,1} & \cdots & c_{Y,m} \\ c_{Z,0} & c_{Z,1} & \cdots & c_{Z,m} \end{bmatrix}, \; t = \begin{bmatrix} 1 \\ t \\ \vdots \\ t^m \end{bmatrix} \qquad (3)$$

The degree m of the space coordinate functions may or may not be the same at the degree n of the camera coordinate functions. It is realized that the 3D curve is unambiguously defined by the coefficients in $C_s$ ("3D coefficients").

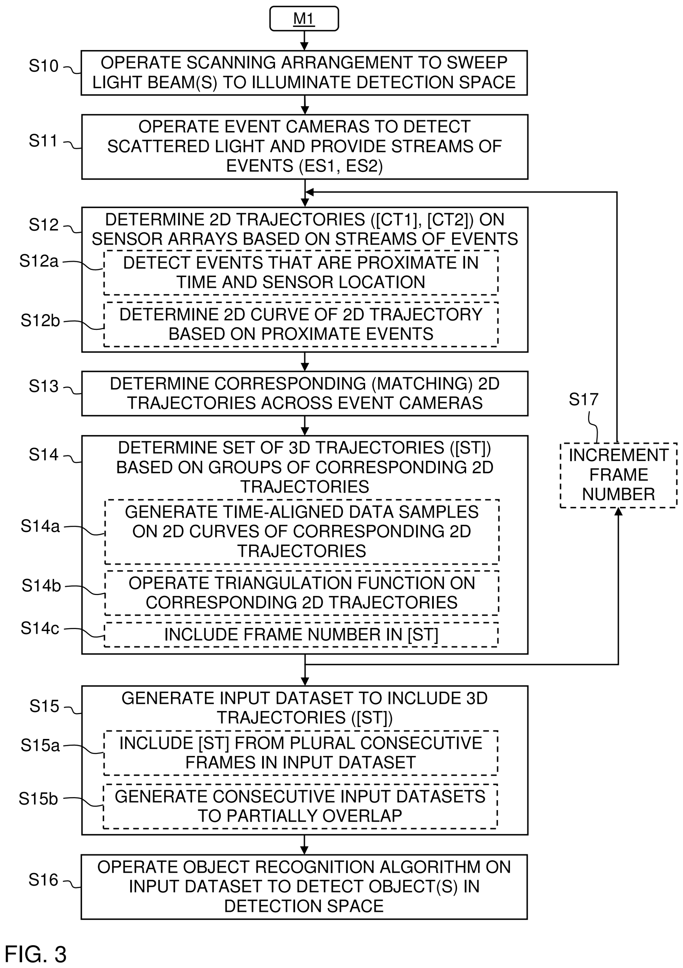

In FIG. 2, the processing system 60 further includes a third module or sub-system 63, which is configured to receive and process [ST] into the above-mentioned object detection data, ODD. The third module 63 includes or implements an object recognition algorithm 63a, which is configured to operate on an input dataset that includes [ST], as will be further described below with reference to FIGS 3-4. In some embodiments, the third module 63 includes artificial intelligence. For example, the object recognition algorithm 63a may be a trained machine learning-based model. The machine learning-based model may include one or more neural networks and may be trained to detect objects, and optionally classify the detected objects into one or more object classes among a plurality of predefined object classes.

FIG. 3 is a flow chart of an example method M1 which may be performed by an object detection system. The method M1 will be described with reference to the examples in FIGS 1A-1D and 2. Optional steps are indicated by dashed lines. In step S10, a beam scanner ("scanning arrangement", cf. 20 in FIGS 1A, 1C, 1D) is operated to sweep one or more light beams in the detection space. In step S11, while step S10 is performed, the event cameras ("event-based sensors", cf. 30, 40, 50 in FIG. 1A, and 30, 40 in FIGS 1B, 1C, 2) are operated to detect light that is scattered from the detection space, by objects present in the detection space. As a result of step S11, each event camera provides an event stream ("data stream of events", cf. ES1 in FIG. 1B, and ES1, ES2 in FIG. 2). Steps S12-S16 are performed by a processing system (cf. 60 in FIGS 1A, 1B, 1C and 2).

In step S12, a respective 2D ensemble is determined for each event camera based on the event streams from the respective event camera. In FIG. 2, step S12 is performed by the first modules 61a, 61b to yield a respective 2D ensemble [CT1], [CT2]. Step S12 may be performed in many different ways. Generally, step S12 determines the start time, the duration and the 2D curve for the 2D trajectory. In some embodiments, as indicated in FIG. 3, step S12 may involve a step S12a of detecting or identifying events that are proximate in time, given by their time stamp (cf. t in FIG. 1B), and proximate in location, given by the local position (cf. x, y in FIG. 1B). Step S12a results in a 2D trajectory comprising a plurality of data points that are both temporally and spatially coherent. In step S12b, the 2D curve of the 2D trajectory is determined based on the time stamps and the local positions of the data points. For example, step S12b may involve operating a curve fitting algorithm on the data points to determine a resulting curve that matches the data points with sufficient accuracy. Any conventional curve fitting algorithm may be used. For the example, the curve fitting algorithm may be based on least squares. In some embodiments, the curve fitting algorithm is configured to fit a parametric polynomial function of a predefined degree to the data points, resulting in the 2D coefficients in the matrix $\boldsymbol{C_c}$, as described above.

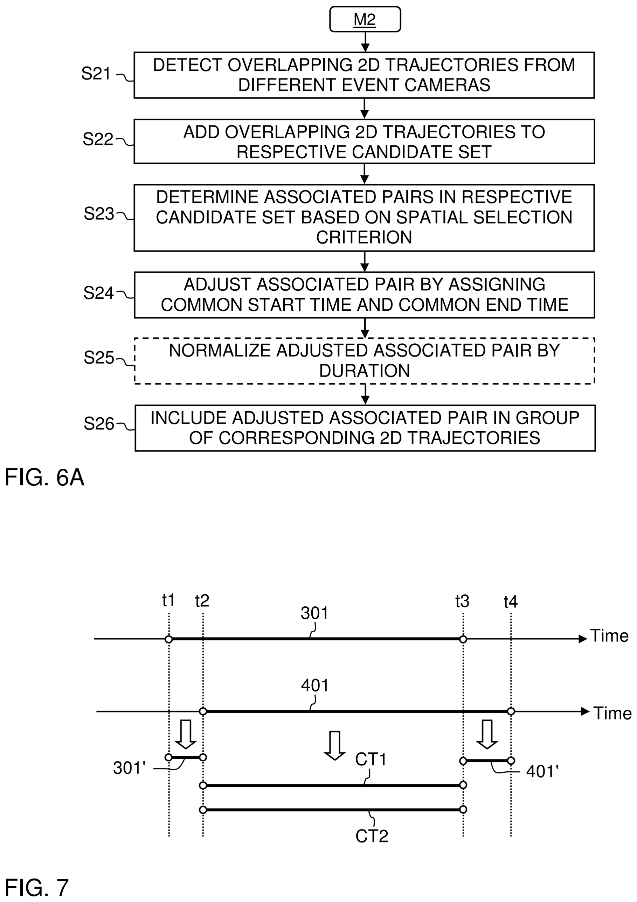

In step S13, a correspondence between 2D trajectories on different event cameras are determined, based on the 2D ensembles [CT1], [CT2] from step S12. In FIG. 2, step S13 is performed by the second module 62. Step S13 may be involve evaluating pairs of 2D trajectories from different event cameras based on a temporal criterion and a spatial criterion, where the temporal criterion requires an overlap in time between the 2D trajectories, and the spatial criterion defines an allowable relative location between the 2D trajectories on the event cameras. Examples of step S13 will be described further below with reference to FIGS 6A-6B.

Step S13 results in one or more groups of mutually corresponding ("matching") 2D trajectories, where each such group includes at least two 2D trajectories that are deemed likely to have the same origin in the detection space. In other words, the matching 2D trajectories in a group are deemed to all represent the movement of the same scanning beam (cf. 21 in FIGS 1A, 1C, and 1D) across an object in the detection space, as detected by different event cameras.

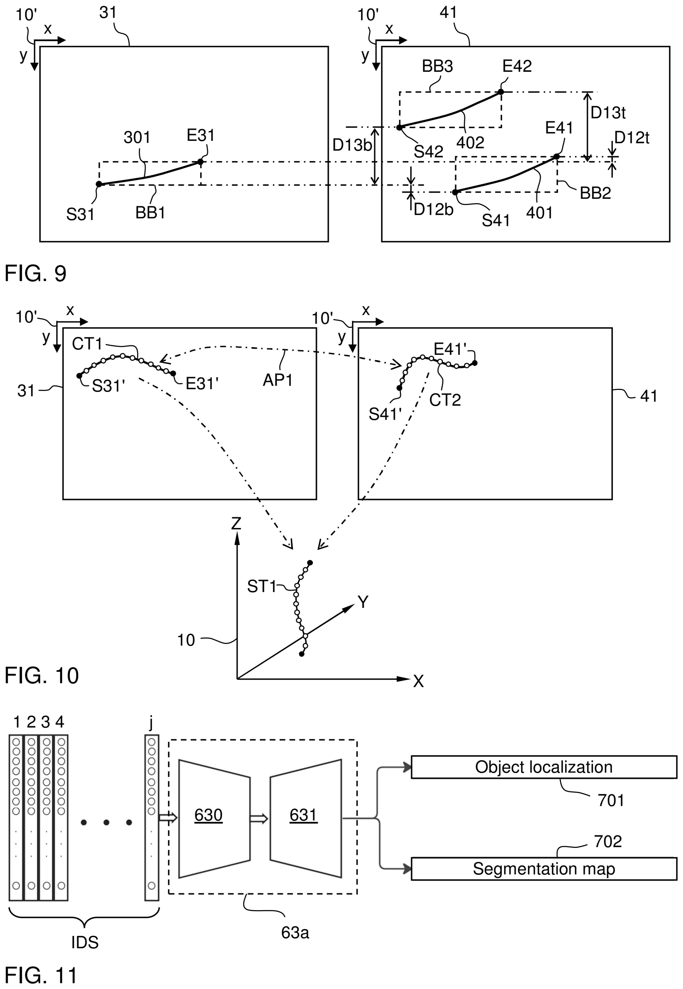

In step S14, a 3D ensemble is determined based on the group(s) of matching 2D trajectories from step S13. Specifically, a 3D trajectory is determined for each group of matching 2D trajectories. In FIG. 2, step S14 is performed by the second module 62 to yield the 3D ensemble [ST]. As noted with reference to FIG. 2, each 3D trajectory in [ST] is defined by a parametric polynomial function of time for each of the space coordinates of the reference coordinate system (10 in FIG. 1D). In some embodiments, step S14 comprises operating a triangulation function on the group of matching 2D trajectories. Any conventional triangulation function may be used. Examples of step S14 will be described further below with reference to FIG. 10.

In step S15, an input dataset IDS is generated to include the 3D ensemble [ST] from step S14. In FIG. 2, step S15 is performed by the third module 63.

In step S16, the above-mentioned object recognition algorithm (cf. 63a in FIG. 2) is operated on the IDS from step S15 for detection of one or more objects in the detection space. Step S16 results in the object detection data, ODD.

The example method M1 provides a processing-efficient technique for detecting objects in a detection space monitored by event cameras. One reason for the processing-efficiency lies in the step-wise and structured data reduction that is performed by the method M1. Huge amounts of data points (events) are generated by the event cameras. For example, during a single second, each of the two event cameras may generate 1-10 million data points, or more, to be processed for object detection. In the method M1, a first data reduction and structuring involves organizing the event streams from the event cameras into 2D trajectories, for each camera separately. A second data reduction and structuring involves converting the 2D trajectories into 3D trajectories. A third data reduction and structuring involves generating the 3D trajectories to be represented by space coordinate functions, for example given by the 3D coefficients in the matrix $\boldsymbol{C_s}$. Compared to operating an object recognition algorithm on the original data points from the event cameras, or on 2D trajectories, the use of 3D trajectories represented by space coordinate functions will significantly reduce the required complexity of the object recognition algorithm. Likewise, the performance of the object recognition algorithm is significantly improved, in terms of both processing efficiency and detection reliability.

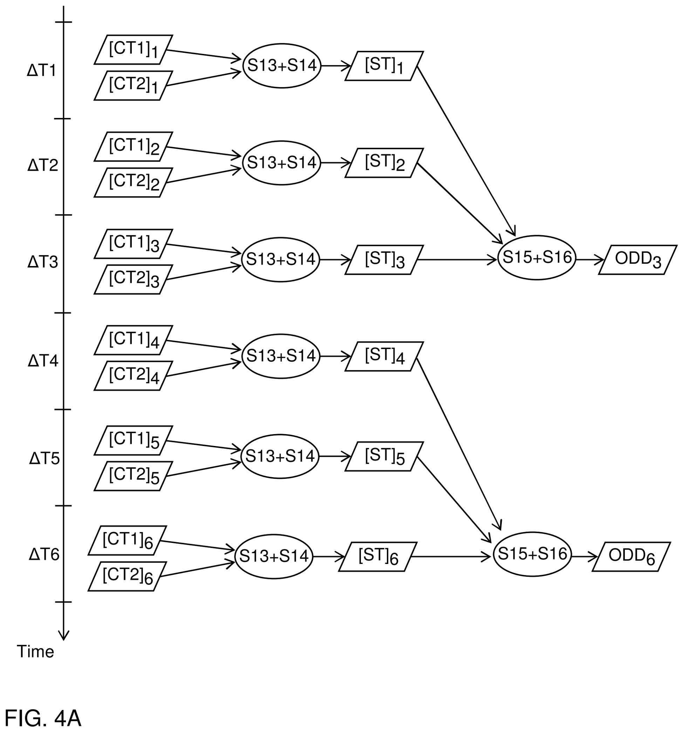

It is understood that steps S12-S14 may be repeated over time, while steps S10-S11 are being performed. Steps S12-S14 thereby produce a time sequence of 3D ensembles [ST]. Each repetition of steps S12-S14 operates on events generated by the event cameras during a respective detection time period, which may be fixed or variable. In the following, a detection time period is also denoted a "frame", by analogy with frame-wise readout of image data from conventional image sensors. This is illustrated in FIG. 4A, where $\Delta T1$-$\Delta T6$ represent a time sequence of detection time periods. FIG. 4A assumes that there are two event cameras in the object detection system. During a detection time period, $\Delta Ti$ (i = 1...6), step S12 generates a first 2D ensemble [CT1]i for a first event camera, and a second 2D ensemble [CT2]i for a second event camera. By steps S13-S14, a 3D ensemble [ST]i is generated by processing [CT1]i and [CT2]i.

In some embodiments, the detection time period has a duration of 10-1,000 $\mu$s. Typically, the detection time periods are non-overlapping to speed up the processing.

In some embodiments, as shown in FIG. 4A, the input dataset is generated by step S14 to include a plurality of 3D ensembles, which have been determined for a plurality of consecutive detection time periods $\Delta Ti$. The object recognition algorithm is thereby operated on a plurality of 3D ensembles, by step S15, to generate object detection data, represented as ODD3 and ODD6 in FIG. 4A. This will increase the amount of 3D data that is made available to the object recognition algorithm at each execution of step S15 and may thereby improve the detection reliability of step S15.

It is realized that the increase in reliability comes at the expense of a decreased response time, since ODD is generated at a lower rate. In some embodiments, the object recognition algorithm is supplied with 3D ensembles for 10-2,000 detection time periods. Thus, the generation rate of ODD may be significantly reduced.

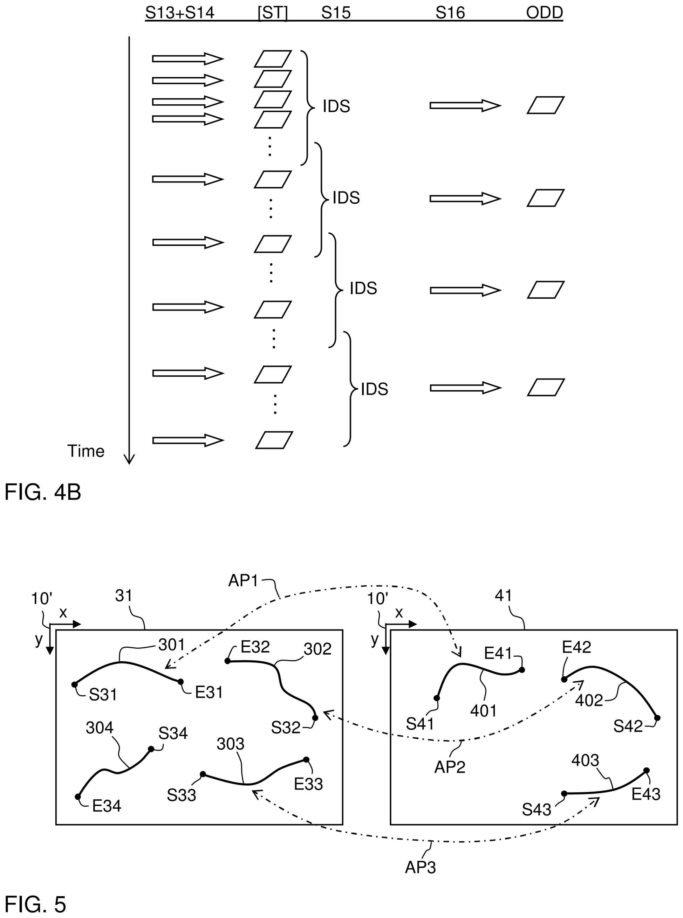

The present Applicant has found that a good compromise between detection reliability and response time is achieved by configuring the input datasets to the object recognition algorithm to be partly overlapping. An example is shown in FIG. 4B, where steps S13 and S14 result in 3D ensembles, [ST], for consecutive detection time periods (along vertical time axis). Step S15 is performed to generate the input dataset, IDS, to include a plurality of consecutive 3D ensembles. As seen along the time axis, a time series of IDSs are generated, with each IDS being processed in step S16 to generate ODD. Further, by step S15, consecutive input datasets overlap, in that they partly contain the same 3D ensembles.

Reverting to FIG. 3, step S15 may include a step S15a of generating the IDS to include 3D ensembles (determined by step S14) for a plurality of consecutive detection time periods ("frames"). Thus, by step S15a, 3D ensembles provided for a predefined number of frames may be buffered and supplied in bulk for use by step S16. This mode of operation is exemplified in FIG. 4A.

As shown in FIG. 3, step S15 may include a further step S15b of generating the input datasets such that consecutive input datasets overlap. In this context, an overlap between input datasets implies that the input datasets have at least one 3D ensemble in common. This mode of operation is exemplified in FIG. 4B. Different types of overlap are possible. However, for speed of processing, the oldest 3D ensembles may be removed from the latest input dataset when new input datasets are generated. Thus, the consecutive input datasets are updated according to a FIFO principle (first-in, first-out). In other words, if two consecutive input datasets may be denoted preceding (old) IDS and current (new) IDS, the oldest portion of the current IDS is identical to the newest portion of the preceding IDS. It is currently believed that an appropriate compromise between detection reliability and response time is achieved when the overlap between consecutive input datasets is in the range of 10%-30%. Thus, about 10-30% of the 3D ensembles are identical between consecutive input datasets.

The present Applicant has found that it may be beneficial for the performance of the object recognition algorithm to associate each 3D ensemble, [ST], with an index that is indicative of the detection time period for which [ST] has been generated, and provide the association between index and [ST] in the input dataset. In FIG. 3, the index is denoted frame number. As seen, a step S17 is provided to increment the frame number after each execution of steps S12-S14, i.e. for each detection time period. Further, step S14 includes a step S14c of including the frame number in the 3D ensemble, [ST]. In a non-limiting example, the frame number may be added to each of the 3D trajectories in [ST]. Step S14c is particularly relevant when the input dataset comprises plural 3D ensembles, in accordance with step S15a, optionally in combination with step S15b. The frame number may indicate the temporal order of the 3D ensembles in the input dataset to the object recognition algorithm.

The addition of a frame number or index for each 3D ensemble in the input dataset may be particularly relevant if the 3D trajectories are normalized in time. In this context, "normalized in time" implies that all 3D trajectories are generated, by step S14, to have the same start time and the same duration. In other words, the start time and the duration are set to default values for all 3D trajectories. Surprisingly, this has been found to improve the performance of the objection recognition algorithm, at least when the objection recognition algorithm comprises a machine learning-based model. The use of default values also obviates the need to include a start time and a duration (or end time) in the respective 3D trajectory, since these are inherent. It is realized that the addition of the frame number, by step S14c, will allow the object recognition algorithm to account for the temporal order the 3D ensembles in the input dataset.

An example method M2, which may be performed as part of step S13 in FIG. 3, will be presented with reference to a flow chart in FIG. 6A. The method M2 aims at determining mutually corresponding (matching) 2D trajectories on different event cameras, based on the 2D ensembles generated by step S12 in FIG. 3, and output groups of mutually corresponding 2D trajectories. For simplicity, the method M2 will be introduced with reference to FIG. 5, which shows a first ensemble of first 2D trajectories 301-304 on a sensor array 31 of a first event camera, and a second ensemble of second 2D trajectories 401-403 on a sensor array 41 of a second event camera. The 2D trajectories 301-304 and 401-403 have all been determined by step S12 during a detection time period ("frame"). Each sensor array 31, 41 is associated with a local coordinate system 10', which defines local positions on the sensor array in camera coordinates $(x, y)$. Camera coordinates are also denoted "surface coordinates" herein. Each of the 2D trajectories extends from a 2D start position to a 2D end position. For the first 2D trajectories on the sensor array 31, the start and end positions are designated by S3x and E3x, respectively. For the second 2D trajectories on the sensor array 41, the start and end positions are designated by S4x and E4x, respectively. It is assumed that first trajectory 301 corresponds to second trajectory 401, first trajectory 302 corresponds to second trajectory 402, and first trajectory 303 corresponds to second trajectory 403, whereas there is no counterpart to first trajectory 304 on the sensor array 41. The method M2 is performed to determine corresponding first and second trajectories and identify them as associated pairs. In the illustrated example, the method M2 determines three associated pairs AP1, AP2 and AP3, as indicated by double-ended arrows. If only two event cameras are used, each associated pair form a group of mutually corresponding 2D trajectories. If more than two event cameras are used, the method M2 is operated on all available pairs of 2D ensembles to identify associated pairs of 2D trajectories across all event cameras.

For simplicity, the method M2 is only given for processing of two 2D ensembles (cf. [CT1], [CT2] in FIG. 2) from two event cameras. These two 2D ensembles may be denoted "first ensemble" and "second ensemble".

In step S21, the 2D ensembles determined by step S12 are processed for detection of first and second 2D trajectories that overlap in time. Step S21 may apply a constraint that the overlap should exceed a predefined minimum time. It is to be noted that plural 2D trajectories may overlap with a first 2D trajectory, and vice versa.

In step S22, the overlapping 2D trajectories from step S21 are added to a respective candidate set.

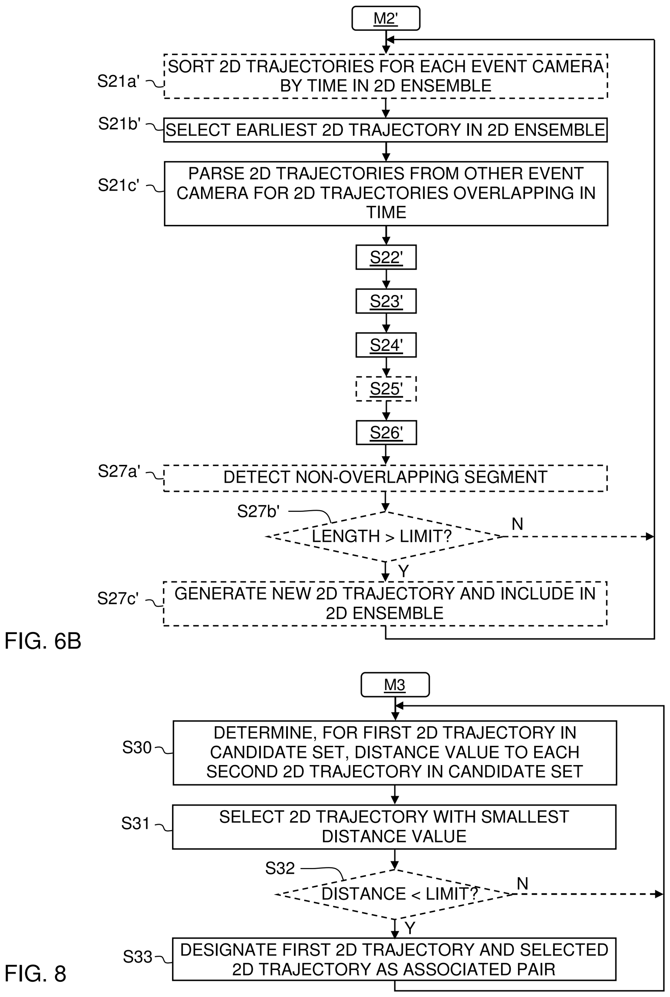

In step S23, an associated pair of first and second 2D trajectories among the trajectories in the respective candidate set are determined based on a spatial selection criterion. In some embodiments, the spatial selection criterion defines one or more spatial limits for the relative positioning of the first and second 2D trajectories on the first and second event cameras. For example, in FIG. 5, the spatial criterion may define where a second trajectory can be located relative to a first trajectory for them to be an associated pair. The spatial selection criterion may be given in the local coordinate system 10' of the respective sensor array 31, 41. An example of step S23 is given below with reference to FIGS 8-9.

After step S23, when all candidate sets have been evaluated, a number of associated pairs of first and second 2D trajectories have been identified, for example AP1-AP3 in FIG. 5.

In step S24, for each associated pair, the start time and the end time of the included first and second 2D trajectories are adjusted, if necessary, to correspond to the overlap in time between the first and second 2D trajectories. In practice, this means that non-overlapping portions of the first and second 2D trajectories are cut-off, so that the respective pair of first and second 2D trajectories have a common start time and a common duration.

An example of step S24 is illustrated in FIG. 7, where the temporal extents of first and second 2D trajectories 301, 401 are illustrated along a respective time axis. The first trajectory has start time t1 and end time t3, and the second trajectory has start time t2 and end time t4. Step S24 results in an adjusted first trajectory CT1, which is formed by changing the start time of the first trajectory 301 to t2, and an adjusted second trajectory CT2, which is formed by changing the end time of the second trajectory 401 to t3.

It should be noted that the adjustment in step S24 is simple and efficient if the respective 2D trajectory is defined by camera coordinate functions. In this case, the definition of the 2D curve need not be changed, but only the start time and/or the end time of the 2D trajectory. As noted above, changing the end time is equivalent to changing the duration. On the other hand, if the 2D curve is defined as a sequence of camera coordinates at different time points, i.e., individual data points, step S24 is rendered more complex and involves changing the data points of the 2D curve.

In step S26, the respective associated pair, as adjusted by step S24, is included in a group of corresponding 2D trajectories. Thus, step S26 may result in a plurality of groups, each containing an associated pair. Each such group may be expanded by one or more additional 2D trajectories, if the method M2 is repeated for processing of one or more additional 2D ensembles obtained from a respective additional event camera.

As noted above, it has been found beneficial for the 3D trajectories to be normalized in time. In some embodiments, the 2D trajectories are processed for normalization by time, since 3D trajectories that are generated by step S14 (FIG. 3) based on normalized 2D trajectories will inherently be normalized. Thus, the method M2 may include a step S25, in which the 2D trajectories of the respective associated pair are normalized by duration. It is to be noted that step S25 does not only involve changing the start and end times of the respective 2D trajectory, but also involves changing the 2D curve, whether or not it is defined by camera coordinate functions. However, the normalization is rendered considerably simpler by use of camera coordinate functions. Basically, the normalization of step S25 involves adjusting the 2D curve of the respective 2D trajectory to a default start time and a default duration.

The adjustment of the 2D curve by normalization may be done with standard algorithms. To give a non-limiting example, assume that a 2D trajectory has a start time t1 and end time t2, and that its 2D curve is given by camera coordinate functions defined by the coordinate matrix $C_c$. Thus, the coordinate matrix $C_c$ has been calculated for the original time interval [t1, t2]. The task of step S25 is to calculate a corresponding coordinate matrix $\hat{C}_c$ for a normalized time interval given by default start and end times [td1, td2]. In one example, the normalized time interval is unitary, for example given as [0, 1] or [-0.5, 0.5]. For simplicity, the following example will only be given for normalization in the x dimension. The normalization in the y dimension is done in the same way. A first time vector $t1$ is generated to include a number i of time values in the original time interval. A second time vector $t2$ is generated to include corresponding time values in the normalized time interval. A sample vector $x1$ is generated by operating the x camera coordinate function $x(t)$ on $t1$. Further, a polynomial time matrix $A$ is generated to include all relevant powers $(n)$ of the time samples in $t2$:

$$A = \begin{bmatrix} 1 & td1 & ... & td1^n \\ \vdots & \vdots & \vdots & \vdots \\ 1 & td2 & ... & td2^n \end{bmatrix} \quad (4)$$

with $A$ being an $(i \times n)$ matrix. The equation system to be solved is:

$$x1 = A \cdot \hat{C}_{c,x} + e \quad (5)$$

with e being an error vector to be minimized and $\hat{C}_{c,x}$ being an $(n \times 1)$ vector containing the x coefficients of $\hat{C}_c$.

By ordinary least squares (OLS), the equation system may be rewritten as $\hat{C}_{c,x} = (A^T \cdot A)^{-1} \cdot (A^T \cdot x1) = M \cdot b$. It is realized the $\hat{C}_{c,x}$ may be determined by use of conventional numerical methods for solving linear equation systems, such as Gaussian elimination, LU decomposition, Cholesky decomposition, QR decomposition, etc.

The normalization need not be performed as part of the method M2 and thus as part of step S13 in FIG. 3. In a variant, which is believed to be more processing efficient, the normalization is instead performed as part of step S12 in FIG. 3. In one example of this variant, step S12b involves converting the original time stamps of the plurality of data points from step S12a into normalized time stamps within a normalized time interval. Here, "original" indicates that the time stamps are given by or included in the event stream. As noted above, the normalized time interval may be unitary. Specifically, a normalized time stamp is generated to have a relative location within the normalized time interval that is equal to the relative location of an original time stamp within the original time interval that extends from the original start time to the original end time. Further, step S12b involves determining the 2D curve based on the normalized time stamps and the local positions of the data points. Thereby, the camera coordinate functions (Equation 1, above) are generated to represent the 2D curve in the normalized time interval. In other words, the coordinate matrix $\hat{C}_c$ for the normalized time interval is obtained already in step S12b. In this example, to enable the method M2, the respective 2D trajectory may comprise the 2D curve (given by $\hat{C}_c$), the original start time, and the original duration (and/or the original end time). Thereby, step S21 may be performed in the time base of the original time stamps. Steps S22-S23 may then be performed as described hereinabove. Step S24 may be performed by adjusting the normalized start time and/or the normalized end time of the 2D trajectories in the respective associated pair, so that they have a common start time and a common end time in the normalized time interval (cf. FIG. 7). It is understood that the 2D curve may no longer have a duration equal to the normalized time interval after step S24. To correct this, the 2D curve may be re-normalized by performing step S25. However, to avoid re-normalization, the respective associated pair, as adjusted by step S24, may be represented by a plurality of re-sampled 2D data points between the common start time and the common end time in the normalized time interval. Each re-sampled 2D data point is generated by entering a sample time value into the camera coordinate functions. The sample time values may or may not be equally spaced between the common start time and the common end time. The re-sampled 2D data points from step S24 may be used by step S14b (below) for generating the 3D trajectory. Thus, step S24 may replace step S14a (below).

Turning now to FIG. 8, which is a flow chart of an example method M3 that may be performed as part of step S23 of the method M2. The method M3 will be described with reference to FIG. 9, which shows a first trajectory 301 on the sensor array 31 of a first event camera and two second trajectories 401, 402 on the sensor array 41 of a second event camera. It is assumed that the first trajectory 301 has been found to overlap in time with each of the second trajectories 401, 402 and that the trajectories are included in a candidate set by step S22. The method M3 is performed to determine an associated pair of first and second 2D trajectories within the candidate set.

In step S30, a value of a distance parameter is determined from each of the second 2D trajectories in the candidate set to the first 2D trajectory in the candidate set. In FIG. 9, the distance between trajectory 401 and trajectory 301 is determined, as well as the distance between trajectory 402 and trajectory 301. The distance parameter is suitably given in the local coordinate system 10'. In step S31, the second 2D trajectory with the smallest value of the distance parameter ("smallest distance") is selected. In step S33, the first 2D trajectory and the selected second 2D trajectory are designated as an associated pair. Thus, the method M3 applies a greedy approach to determine the associated pair. After step S33, the method M3 returns to step S30 to process another candidate set. As shown, the method M3 may include a step S32 of comparing the smallest distance to a predefined distance limit. If the smallest distance is below the distance limit, step S32 proceeds to step S33. Otherwise, no associated pair is determined for the candidate set. By step S32, the greedy approach is balanced, to avoid clearly unrelated pairs of first and second 2D trajectories from being designated as an associated pair.

It is realized that steps S30 and S31, optionally together with step S32, corresponds to a spatial selection criterion.

The distance parameter may be defined in many different ways. In one example, the distance parameter represents a distance, in the local coordinate system, between one or more reference points for two trajectories. Such a reference point may or may not be located on the respective trajectory. In one example, the start position and/or the end position of the trajectory is used as reference position. In another example, a center point is calculated for the trajectory and used as a reference position. In yet another example, a bounding box is defined for the trajectory and one or more reference positions are defined relative to or on the bounding box.

If plural reference points are defined for each trajectory, plural distances are determined between pairs of corresponding reference points on the two trajectories, and the distance parameter represents the plurality of distances, for example as an aggregation (average, sum, sum of squares, etc.), a median, a maximum, a minimum, etc.

In some embodiments, the distance parameter is given in a predefined direction in the local coordinate system 10'. This means that the distance(s) between the reference point(s) of the trajectories are projected onto the predefined direction, and that the distance parameter represents such distance(s). The use of a predefined direction will facilitate the calculation of the distance parameter. The predefined direction may be given by or correspond to a relative orientation of the event cameras. The use of a predefined direction may be advantageous when the event cameras are arranged such that the translation vector between the event cameras, and the optical axes of the event cameras, are all located in a common geometric plane. Then, the predefined direction is perpendicular (normal) to the geometric plane. In the example of FIG. 9, the predefined direction coincides with the y axis of the local coordinate system 10'. Typically, the y axis is a vertical direction that is parallel to the direction of gravity. For example, such a predefined direction may be used when the event cameras are mounted to be approximately aligned in the horizontal direction. Stated differently, the event cameras are arranged with minimal disparity in the vertical direction. For example, the event cameras may be rigidly mounted to a common bar or rod with only a small relative angle between them, so that they have approximately the same vertical angle onto the scene. In FIG. 9, the distance parameter between trajectories 301, 401 may be given by the vertical distance D12b between the start points S31, S41, and/or by the vertical distance D12t between the end points E31, E41. Similarly, the distance parameter between trajectories 301, 402 may be given by the vertical distance D13b between the start points S31, S42, and/or by the vertical distance D13t between the end points E31, E42. In FIG. 9, is clear that the trajectories 301, 401 result in a smaller value of the distance parameter than the trajectories 301, 402. FIG. 9 also shows bounding boxes BB1, BB2, BB3 that may be defined for the trajectories 301, 401, 402 and used for evaluating the distance parameter.

The method M2 in FIG. 6A is described as processing the 2D trajectories of two 2D ensembles in bulk to determine associated pairs of 2D trajectories. However, it may also be implemented to sequentially process the 2D trajectories of the two 2D ensembles. FIG. 6B is a flow chart of an example method M2', which performs such sequential processing. The method M2' repeatedly performs a sequence of steps. Seen over all repetitions, the steps of the method M2' correspond to the steps S21-S26 of the method M2.

Like the method M2, the method M2' is performed for two 2D ensembles (cf. [CT1], [CT2] in FIG. 2) from two event cameras, and may be repeated for other combinations of 2D ensembles, if available. These two 2D ensembles may be denoted "first ensemble" and "second ensemble". The method M2' includes a step S21a' of sorting the 2D trajectories in the respective 2D ensemble from step S12 by time, for example by start time. By step S21a', the 2D trajectories for each of the two event cameras are arranged in an order that reflects when the respective 2D trajectory was detected on the event camera. Step S21a' will speed up the processing. In step S21b', a 2D trajectory is selected from the 2D ensembles, specifically the earliest 2D trajectory. The selected trajectory is then deleted from its 2D ensemble. Assuming that the selected 2D trajectory originates from a first event camera ("selected first trajectory"), a step S21c' is performed to parse the 2D ensemble of the second event camera for detection of any 2D trajectory that overlaps in time with the selected first trajectory. Step S21c' may require the overlap to exceed a predefined minimum time. Step S21c' will select at least one 2D trajectory, forming a respective "candidate second trajectory". If step S21c' fails to detect a 2D trajectory with (sufficient) overlap, the method returns to step S21b' for selection of another 2D trajectory.

In step S22', the selected first trajectory and each candidate second trajectory may be seen to form a candidate set (cf. step S22).

In step S23', each candidate second trajectory is evaluated in relation to the selected first trajectory by use of the spatial selection criterion (cf. step S23). If step S23' finds a matching second trajectory in the candidate set, the selected first trajectory and the matching second trajectory form an associated pair. Further, the matching second trajectory is deleted from its 2D ensemble. The skilled person realizes that the method M3 in FIG. 8 may be adapted for use in step S23'.

In step S24', the start and end times of the 2D trajectories in the associated pair are adjusted, if necessary, as described for step S24.

In step S25', the 2D trajectories of the associated pair may be normalized by duration, as described for step S25. Alternatively, as described above, the 2D trajectories may have been normalized already in step S12 (FIG. 3).

In step S26', the associated pair, as adjusted by step S24' and optionally normalized by step S25', forms a group of corresponding 2D trajectories. Each such group may be expanded by one or more additional 2D trajectories, if the method M2' is later repeated for processing of one or more additional 2D ensembles obtained from a respective additional event camera.

The steps of the method M2' are repeated to identify further associated pairs. Step S21a' may or may not be performed every repetition, depending on the need for re-sorting the 2D trajectories.

A need for re-sorting may arise if steps S27a'-S27c' are performed. Steps S27a'-S27c' aim at making use of the non-overlapping segments that are "cut off" in step S24'. For example, in FIG. 7, an initial segment 301' of 2D trajectory 301 is non-overlapping, and a terminal segment 401' of 2D trajectory 401 is non-overlapping. By steps S27a'-S27c', the segments 301', 401' are added to the 2D ensembles and are thus made available ("recycled") for matching to other 2D trajectories. Steps S27a'-S27c' may increase the number of associated pairs that are detected by the method M2', and thereby increase the performance of the method M1. In step S27a', it is determined whether step S24' has resulted in a non-overlapping segment. If so, step S27b' may be performed to check if the length (duration) of the non-overlapping segment exceeds a predefined duration limit. If the length is below the duration limit, the non-overlapping segment is discarded and the method returns to step S21a'. Step S27b' will thus prevent small segments from being recycled for matching. Step S27b' will increase the processing-efficiency of the method M2'. In step S27c', a new 2D trajectory is generated for the non-overlapping segment and added to the relevant 2D ensemble. If the new 2D trajectory originates from a 2D trajectory in a first ensemble, the new 2D trajectory is added to the first ensemble. If the new 2D trajectory originates from a 2D trajectory in a second ensemble, the new 2D trajectory is added to the second ensemble. If the 2D curve is given by camera coordinate functions, the step S27c' is quite efficient since the 2D curve of the new 2D trajectory is identical to the 2D curve of the 2D trajectory from which the non-overlapping segment was cut off. Thus, in FIG. 7, the 2D curve of new trajectory 301' is identical to the 2D curve of trajectory 301. If step S24' results in two non-overlapping segments (cf. FIG. 7), steps S27a'-S27c are performed for each non-overlapping segment.

It is to be understood that steps S27a'-S27c' may be included in the method M2 as well.

Reverting to step S14 of the method M2 (FIG. 3), a 3D trajectory may be generated based on a group of corresponding 2D trajectories in different ways. In some embodiments, the 3D curve of the 3D trajectory is generated algebraically based on the 2D curves of the 2D trajectories, if the respective 2D curve is given by camera coordinate functions. In other words, the $C_s$ matrix (Eq. 3) may be calculated based on the $C_c$ matrices (Eq. 2) of the 2D curves, taking into account the relative orientation of the event cameras.

In some embodiments, as exemplified in FIG. 10, the respective 2D curve is first re-sampled into 2D points in a sample grid, and a 3D point is then determined per 2D point by triangulation processing, and the 3D curve is then calculated by fitting parametric polynomial functions to the 3D points, for instance using a least squares method, a maximum likelihood method or a spline method. In FIG. 10, CT1, CT2 are 2D trajectories on sensor arrays 31, 41 of first and second event cameras. CT1 and CT2 is an associated pair AP1. CT1, CT2 have been processed by step S24 into equal duration, with CT1 having start point S31' and end point E31', and CT2 having start point S41' and end point E41'. The open circles along CT1, CT2 represent re-sampled 2D points. Each re-sampled 2D data point is given by an *x* value and a y value in the local coordinate system 10. Each re-sampled 2D point is generated by entering a time value into the camera coordinate functions. FIG. 10 also shows the 3D trajectory ST1 that is calculated from CT1, CT2. ST1 is given in the reference coordinate system 10. The filled circles on ST1 are start and end points, and the open circles are 3D points generated for pairs of re-sampled 2D points on CT1, CT2.

The embodiment in FIG. 10 is represented by steps S14a-S14b in FIG. 3. In step S14a, discrete 2D positions ("re-sampled 2D data points") are determined along corresponding 2D trajectories (CT1, CT2), with the discrete 2D positions being time-aligned between the corresponding 2D trajectories. In step S14b, a triangulation function is operated on the time-aligned discrete 2D positions to generate discrete 3D positions, whereupon the discrete 3D positions are processed for generation of a 3D trajectory, for example by curve fitting.

FIG. 11 is a block diagram of a trained machine learning-based model, $MLM_T$, which is used as object recognition algorithm 63a. In the illustrated example, the $MLM_T$ is an encoder-decoder neural network comprising an encoder module 630 and a decoder module 631. The $MLM_T$ 63a may be any type of machine learning model, such as a deep learning neural network, including but not limited to a Convolutional Neural Network (CNN), a transformer, a Recurrent Neural Network (RNN), or a Multilayer Perceptron (MLP). In the illustrated example, the $MLM_T$ 63a receives and jointly processes a number *j* of 3D trajectories. As noted above, the 3D trajectories may originate from a single or plural detection time periods ("frames"). For example, as shown, the $MLM_T$ 63a may output object detection data in the form of a localization 701 of an object in the reference coordinate system (10 in FIG. 10), for example as a 3D bounding box, and/or as a segmentation map 702 in which 3D trajectories are assigned a respective label indicative of an object type among a plurality of predefined object types.

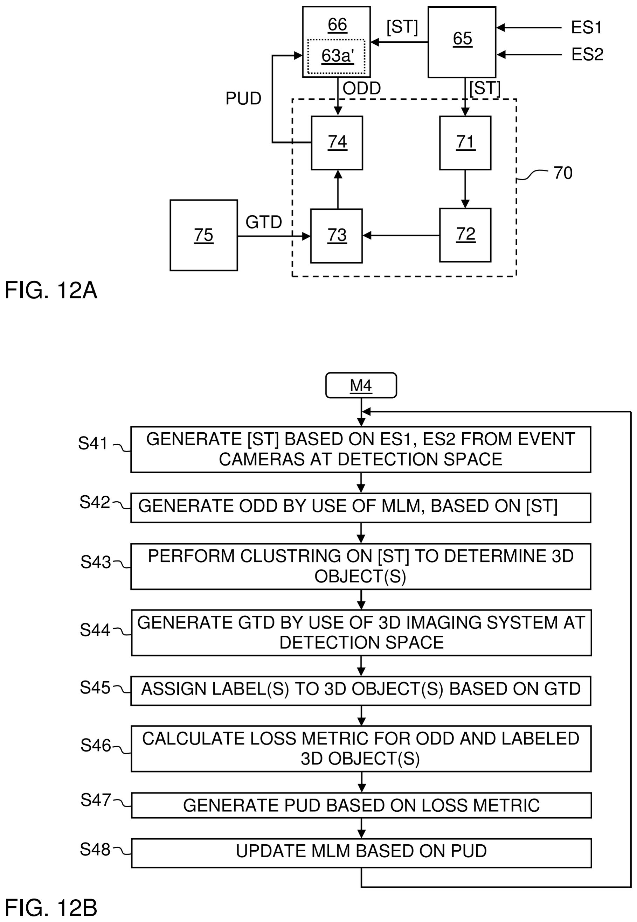

FIG. 12A is a block diagram of an example system for generating the trained machine learning-based model for use in an object detection system as described herein. The system comprises a supply module 65 for supplying 3D trajectories [ST], and a detection module 66 for generating object detection data ODD based on [ST], by use of an MLM 63a' to be trained. In the illustrated example, the supply module 65 is arranged to generate [ST] based on event streams ES1, ES2 from event cameras (not shown) that are arranged to detect reflected light from a detection space. For example, the supply module 65 may include a combination of modules 61a, 61b, 62 in FIG. 2. The system further comprises a training sub-system 70, which is arranged to receive [ST] from the supply module 65 and ODD from the detection module 66. The training sub-system 70 is operable to generate parameter update data PUD, which contains new parameter values for the MLM 63a'. As is well-known in the field of machine learning, the parameter values may be coefficients (or weights) of linear and logistic regression models, weights and/or biases of a neural network, etc. The detection module 66 is arranged to receive PUD and update MLM 63a' with the new parameter values. The training sub-system 70 is further arranged to receive ground truth data GTD from a reference module 75. The GTD may define current locations of objects within the detection space, for example in the form of bounding boxes around the object, and also assign a class to the respective object. The reference module 75 may involve manual labor. However, in some embodiments, the reference module 75 includes a 3D imaging system, for example comprising one or more of an imaging camera, lidar, or radar, which is arranged to view the detection space concurrently with the generation of ES1, ES2. The reference module 75 may be further configured to automatically detect objects in the detection space, and possibly classify the objects, and generate GTD based thereon. Such an automated reference module 75 may significantly speed up the training and reduce or eliminate the need for manual labor.

In the illustrated example, the training sub-system 70 comprises a pre-processing module 71, a clustering module 72, a labelling module 73, and a validation module 74. The pre-processing module 71 is optional and may be configured to adjust the format of [ST] to a format accepted by the clustering module 72. In some embodiments, the pre-processing module 71 is configured to convert [ST] into one or more point clouds, i.e., sampled 3D positions. Depending on implementation, the clustering module 72 is configured to determine clusters of 3D trajectories or sampled 3D positions and determine 3D objects, for example as bounding boxes, based on the clusters. The clustering module 72 is arranged to supply the 3D objects to the labelling module 73. The clustering module 73 may be seen to be optimized/designed for clustering and then used as a "pre-trained teacher network" for object detection. The labelling module 73 is configured to assign labels, given by the GTD, to the 3D objects from the clustering module 72. The validation module 74 is arranged to receive the labeled 3D objects from the labelling module 73, and the ODD from the detection module 66. The validation module 74 is configured to calculate, by use of a loss function, a loss metric that represents the difference between the labeled 3D objects and the ODD. In the terminology of machine learning, the detection module 66 may be denoted a student network. The validation module 74 is further configured to generate new values for the parameters of the MLM 63a' by use of an optimization algorithm. For example, the optimization algorithm may use backpropagation and gradient descent calculations or any other suitable optimization algorithm known in the art.

FIG. 12B is a flow chart of an example method M4 which may be performed by the system in FIG. 12A. In step S41, [ST] is generated by module 65 based on ES1, ES2 from the event cameras at the detection space. In step S42, ODD is generated by use of the MLM 63a' in module 66, based on [ST]. In step S43, clustering is performed by module 72 for determination of one or more 3D objects in the detection space. The clustering may be performed on [ST] or sampled 3D points obtained from [ST]. In step S44, GTD is generated by use of a 3D imaging system at the detection space. In step S45, one or more labels are assigned to the 3D object(s) from step S43, by use of the

GTD from step S44. In step S46, a loss metric is calculated for the ODD from step S42 and labeled 3D object(s) from step S45. In step S47, PUD is generated based on the loss metric. In step S48, the MLM 63a' is updated by the module 66 based on the PUD from step S47. Steps S41-S48 may be repeated until a termination criterion is fulfilled. For example, the termination criterion may be fulfilled when the loss metric is below a predefined loss limit. At this time, the MLM 63a' is trained and may be used as $MLM_T$ 63a in the third module 63 in FIG. 2.

The method M4 may be performed in a lab environment, or in a field test. In one example, the field test is performed by mounting the system in FIG. 12A on a vehicle and driving the vehicle in an environment containing objects to be detected by the MLM 63a'.

The method M4 need not be performed in real time. In variant, [ST] and GTD are collected and stored in a database, and the method M4 is performed offline, by steps S41 and S44 being performed to extract [ST] and GTD, respectively, from the database.

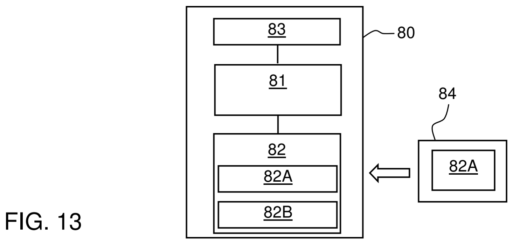

FIG. 13 is a block diagram of an example calculation device 80, which may be configured to perform any of the methods, procedures and functions described herein, or part thereof. The functionality of the calculation device 80 may be defined by a combination of software and hardware circuitry, or exclusively by specific hardware circuitry. In FIG. 13, the calculation device 80 comprises processor circuitry 81, which may be or include a central processing unit (CPU), graphics processing unit (GPU), microcontroller, microprocessor, ASIC, FPGA, or any other specific or general processing device. The calculation device 80 may operate by executing instructions 82A stored in a computer memory, such as memory 82. The instructions 82A when executed by the processor circuitry 81 may cause the calculation device 80 to perform any of the methods, procedures and functions described herein, or part thereof. As shown, the memory may also store configuration data 82B that is used by the calculation device 80 during execution of the instructions 82A. The configuration data 82B may, for example, define the degrees *(n,* m) of the coordinate functions, the minimum time (step S21, S21c'), the distance limit (step S32), the duration limit (step S27b'), etc. The memory 82 may comprise one or more of a buffer, flash memory, hard drive, removable media, volatile memory, non-volatile memory, random access memory (RAM), or another suitable data storage device. Such a memory 82 is considered a non-transitory computer-readable medium. The instructions 82A may be supplied to the calculation device 80 on a computer-readable medium 84, which may be a tangible (non-transitory) product (e.g., magnetic medium, optical disk, read-only memory, flash memory, etc.) or a propagating signal. The calculation device 80 includes an I/O interface 83, which may include any conventional communication interface for wired or wireless communication. For example, the control device 80 may be arranged to receive event streams and provide object detection data (ODD) via the I/O interface 83.

The methods described herein may be applied to generate 3D trajectories that are defined by parametric 3D curves (space coordinate functions) for other purposes than object detection. For example, the 3D trajectories may be used for efficient rendering of a 3D representation of the detection space or a plurality of 2D representations of the detection space, for example from different angles. The 3D trajectories may be output for processing in real time or be stored in a computer memory for later processing.

In an alternative embodiment of the technique described herein, the input data set for the object recognition algorithm includes 3D trajectories in the form of point clouds of 3D positions ("3D trajectory clouds"). Thus, the respective point cloud represents a 3D trajectory and contains a time sequence of 3D positions, with a respective time point being explicitly or implicitly defined for each 3D position. The time points of the 3D positions may be same as the time points associated with the 2D positions that are extracted from the event streams the event cameras, or the time points of re-sampled 2D data points (cf. steps S14a, S24, S25). The 3D trajectory cloud may supplement or replace the 3D trajectory that is defined by a parametric 3D curve as used in the embodiments described hereinabove. The 3D trajectory clouds may be generated in accordance with any of the methods described herein. For example, a 3D trajectory cloud may be generated in accordance with step S14b in FIG. 3. The 3D trajectory cloud may or may not be normalized. The processing of event data into 2D trajectories may or may not involve determining parametric 2D curves (camera coordinate functions) for the 2D trajectories. Thus, step S12b may or may not be performed when generating 3D trajectory clouds.

While the subject of the present disclosure has been described in connection with what is presently considered to be the most practical embodiments, it is to be understood that the subject of the present disclosure is not to be limited to the disclosed embodiments, but on the contrary, is intended to cover various modifications and equivalent arrangements included within the spirit and the scope of the appended claims.

Further, while operations are depicted in the drawings in a particular order, this should not be understood as requiring that such operations be performed in the particular order shown or in sequential order, or that all illustrated operations be performed, to achieve desirable results.

In the following, clauses are recited to summarize some aspects and embodiments as disclosed in the foregoing.

C1. A computer-implemented method of detecting objects in a detection space defined by three space coordinates, said method comprising steps of: operating a scanning arrangement to sweep one or more light beams in the detection space; operating, while the one or more light beams are swept in the detection space, a plurality of event-based sensors to detect scattered light from the detection space and provide a respective data stream of events representing the scattered light detected by a respective event-based sensor among the plurality of event-based sensors; determining, based on the respective data stream of events, an ensemble of two-dimensional, 2D, trajectories that each represents a continuous movement of the scattered light on the respective event-based sensor; determining, based on ensembles of 2D trajectories determined for the event-based sensors, one or more groups of mutually corresponding 2D trajectories on the plurality of event-based sensors; determining, based on the one or more groups of mutually corresponding 2D trajectories, a set of 3D trajectories in the detection space, wherein each of the 3D trajectories is defined by a parametric polynomial function of time for each of the space coordinates; forming an input dataset comprising the set of 3D trajectories; and operating an object recognition algorithm on the input dataset for detection of one or more objects in the detection space.

C2. The method of C1, wherein the steps of determining the ensemble of 2D trajectories, determining the one or more groups of mutually corresponding 2D trajectories, and determining the set of 3D trajectories are repeatedly performed based on the events from the plurality of event-based sensors in a respective detection time period, and wherein the input dataset is formed to include sets of 3D trajectories determined for a plurality of consecutive detection time periods.

C3. The method of C2, wherein the step of forming the input dataset is performed repeatedly to produce a time sequence of input datasets for the step of operating the object recognition algorithm, wherein consecutive input datasets in the time sequence of input datasets overlap by having at least one set of 3D trajectories in common.

C4. The method of C3, wherein each of the consecutive input datasets includes a preceding input dataset and a current input dataset, and wherein the current input dataset and the preceding input dataset overlap so that an oldest portion of the current input dataset is identical to a newest portion of the preceding input dataset.

C5. The method of C3 or C4, wherein the consecutive input datasets overlap by 10%-30%.

C6. The method of any one of C3-C5, wherein each input dataset in the time sequence of input datasets is formed to include sets of 3D trajectories determined for 10-2,000 consecutive detection time periods.

C7. The method of any one of C2-C6, wherein each of the consecutive detection time periods has a duration of 10-1,000 $\mu$s.

C8. The method of any one of C2-C7, wherein the consecutive detection time periods are non-overlapping.

C9. The method of any one of C2-C8, wherein the set of 3D trajectories is associated with an index indicative of the respective detection time period, and wherein the index is included in the input dataset for each of the sets of 3D trajectories in the input dataset.

C10. The method of any preceding clause, wherein each of the 3D trajectories is defined to have a default start time and a default duration, wherein the default start time and the default duration are the same for all 3D trajectories.

C11. The method of any preceding clause, wherein each of the 2D trajectories comprises a start time, an end time, and a 2D curve, which is defined by a second parametric polynomial function of time for each of two surface coordinates on the respective event-based sensor.

C12. The method of C11, wherein the 2D curve is determined by fitting the second parametric polynomial function to a plurality of data points given by the respective data stream of events, each data point comprising a location on the respective event-based sensor and a time stamp.

C13. The method of C12, wherein the time stamp is a normalized time stamp, which is given in a normalized time interval that extends from a default start time to a default end time.

C14. The method of C13, wherein the start time and the end time are included in the respective data stream of events, wherein the normalized time stamp corresponds to an original time stamp in the respective data stream of events, and wherein the normalized time stamp is generated to have a relative location within the normalized time interval that is equal to a relative location of the original time stamp within an original time interval that extends from the start time to the end time.

C15. The method of any one of C11-C14, wherein the ensembles of 2D trajectories comprises a first ensemble of first 2D trajectories for a first event-based sensor, and a second ensemble of second 2D trajectories for a second event-based sensor, and wherein the step of determining the one or more groups of mutually corresponding 2D trajectories comprises: detecting, for a respective first 2D trajectory, one or more second 2D trajectories that overlap in time with the respective first 2D trajectory; adding, to a respective candidate set, the respective first 2D trajectory and the one or more second 2D trajectories that overlap in time; determining, based on a spatial criterion, an associated pair of first and second 2D trajectories for the candidate set; adjusting, for the associated pair, the start time and the end time to correspond to the overlap in time; and including the thus-adjusted associated pair in a group of mutually corresponding 2D trajectories.

C16. The method of C15, further comprising: adjusting the 2D curve of the first and second 2D trajectories in the associated pair to a default start time and a default duration.

C17. The method of C15 or C16, further comprising: processing each associated pair for detection of a first segment in the first 2D trajectory that is non-overlapping in time with the second 2D trajectory, or a second segment in the second 2D trajectory that is non-overlapping in time with the first 2D trajectory; generating a new first 2D trajectory to represent the first segment and/or a new second 2D trajectory to represent the second segment; and including the new first 2D trajectory in the first ensemble or the new second 2D trajectory in the second ensemble.

C18. The method of C17, wherein the new first 2D trajectory or the new second 2D trajectory is generated only if a duration of the first segment or the second segment, respectively, exceeds a predefined duration limit.

C19. The method of any one of C15-C18, wherein said determining the associated pair comprises: determining, for each second 2D trajectory in the candidate set, a value of a distance parameter to the first 2D trajectory in the candidate set; selecting a second 2D trajectory with a smallest value of the distance parameter; and designating the first 2D trajectory and the second 2D trajectory with the smallest value of the distance parameter as the associated pair.

C20. The method of C19, wherein the selected first 2D trajectory and the second 2D trajectory with the smallest value of the distance parameter are designated as the associated pair only if the smallest value is below a predefined distance limit.

C21. The method of C19 or C20, wherein the distance parameter is given in a predefined direction on the event-based sensors.

C22. The method of C21, wherein the predefined direction corresponds to a relative orientation of the event-based sensors.

C23. The method of any one of C19-C22, wherein the distance parameter is representative of a plurality of distances between reference points for the first and second 2D trajectories.

C24. The method of C23, wherein each of the 2D trajectories extends between a 2D start position and a 2D end position on the respective event-based sensor, wherein the 2D start position is attained at the start time, and the 2D end position is attained at the end time, and wherein the reference points include the 2D start position and the 2D end position of the first 2D trajectory and the second 2D trajectory, respectively.

C25. The method of any preceding clause, wherein the step of determining the set of 3D trajectories comprises: operating a triangulation function on the corresponding 2D trajectories.

C26. The method of C25, wherein the step of determining the set of 3D trajectories comprises: determining discrete 2D positions along the corresponding 2D trajectories, wherein the discrete 2D positions are time-aligned between the corresponding 2D trajectories, and wherein the triangulation function is operated on the time-aligned discrete 2D positions to generate discrete 3D positions, and wherein the discrete 3D positions are processed for generation of the set of 3D trajectories.

C27. The method of any preceding clause, wherein each event in the respective data stream comprises a local position on the respective event-based sensor and a time stamp associated with the event, wherein the step of determining the ensemble of 2D trajectories comprises: detecting events that are proximate in time, given by the time stamp, and proximate in location, given by the local position; and determining a respective 2D trajectory based on time stamps and local positions of the detected events.

C28. The method of any preceding clause, wherein the object recognition algorithm is configured to assign the one or more objects to at least one object class among a plurality of predefined object classes.

C29. The method of any preceding clause, wherein the mutually corresponding 2D trajectories in a respective group are deemed to have the same origin in the detection space.

C30. A computer-readable medium comprising computer instructions which when executed by processor circuitry causes the processor circuitry to perform the method of any one of C1-C29.

C31. A system comprising: a scanning arrangement which is operable to sweep one or more light beams in a detection space defines by three space coordinates; a plurality of event-based sensors, which are operable to detect scattered light from the detection space, while the one or more light beams are swept in the detection space by the scanning arrangement, and provide a respective data stream of events representing the scattered light detected by a respective event-based sensor among the plurality of event-based sensors; and a processing arrangement, which is configured to receive the respective data stream of events from the plurality of event-based sensors, said processing arrangement being further configured to: determine, based on the respective data stream of events, an ensemble of two-dimensional, 2D, trajectories that each represents a continuous movement of the scattered light on the respective event-based sensor; determine, based on ensembles of 2D trajectories determined for the event-based sensors, one or more groups of mutually corresponding 2D trajectories on the plurality of event-based sensors; determine, based on the one or more groups of mutually corresponding 2D trajectories, a set of 3D trajectories in the detection space, wherein each of the 3D trajectories defined by a parametric polynomial function of time for each of the space coordinates; form an input dataset comprising the set of 3D trajectories; and operate an object recognition algorithm on the input dataset for detection of one or more objects in the detection space.

**Claims**

1. A computer-implemented method of detecting objects in a detection space defined by three space coordinates, said method comprising steps of:

   operating (S10) a scanning arrangement to sweep one or more light beams in the detection space;
   operating (S11), while the one or more light beams are swept in the detection space, a plurality of event-based sensors to detect scattered light from the detection space and provide a respective data stream of events representing the scattered light detected by a respective event-based sensor among the plurality of event-based sensors;
   determining (S12), based on the respective data stream of events, an ensemble of two-dimensional, 2D, trajectories that each represents a continuous movement of the scattered light on the respective event-based sensor;
   determining (S13), based on ensembles of 2D trajectories determined for the event-based sensors, one or more groups of mutually corresponding 2D trajectories on the plurality of event-based sensors;
   determining (S14), based on the one or more groups of mutually corresponding 2D trajectories, a set of 3D trajectories in the detection space, wherein each of the 3D trajectories is defined by a parametric polynomial function of time for each of the space coordinates;
   forming (S15) an input dataset comprising the set of 3D trajectories; and
   operating (S16) an object recognition algorithm on the input dataset for detection of one or more objects in the detection space.

2. The method of claim 1, wherein the steps of determining (S12) the ensemble of 2D trajectories, determining (S13) the one or more groups of mutually corresponding 2D trajectories, and determining (S14) the set of 3D trajectories are repeatedly performed based on the events from the plurality of event-based sensors in a respective detection time period, and wherein the input dataset is formed to include sets of 3D trajectories determined for a plurality of consecutive detection time periods.

3. The method of claim 2, wherein the step of forming (S15) the input dataset is performed repeatedly to produce a time sequence of input datasets for the step of operating (S16) the object recognition algorithm, wherein consecutive input datasets in the time sequence of input datasets overlap by having at least one set of 3D trajectories in common.

4. The method of claim 3, wherein each of the consecutive input datasets includes a preceding input dataset and a current input dataset, and wherein the current input dataset and the preceding input dataset overlap so that an oldest portion of the current input dataset is identical to a newest portion of the preceding input dataset.

5. The method of claim 3 or 4, wherein the consecutive input datasets overlap by 10%-30%.

6. The method of any one of claims 2-5, wherein the set of 3D trajectories is associated with an index indicative of the respective detection time period, and wherein the index is included in the input dataset for each of the sets of 3D trajectories in the input dataset.

7. The method of any preceding claim, wherein each of the 3D trajectories is defined to have a default start time and a default duration, wherein the default start time and the default duration are the same for all 3D trajectories.

8. The method of any preceding claim, wherein each of the 2D trajectories comprises a start time, an end time, and a 2D curve, which is defined by a second parametric polynomial function of time for each of two surface coordinates on the respective event-based sensor.

9. The method of claim 8, wherein the 2D curve is determined by fitting the second parametric polynomial function to a plurality of data points given by the respective data stream of events, each data point comprising a location on the respective event-based sensor and a time stamp.

10. The method of claim 8 or 9, wherein the ensembles of 2D trajectories comprises a first ensemble of first 2D trajectories for a first event-based sensor, and a second ensemble of second 2D trajectories for a second event-based sensor, and wherein the step of determining (S14) the one or more groups of mutually corresponding 2D trajectories comprises:

> detecting (S21), for a respective first 2D trajectory, one or more second 2D trajectories that overlap in time with the respective first 2D trajectory;
> adding (S22), to a respective candidate set, the respective first 2D trajectory and the one or more second 2D trajectories that overlap in time;
> determining (S23), based on a spatial criterion, an associated pair of first and second 2D trajectories for the candidate set;
> adjusting (S24), for the associated pair, the start time and the end time to correspond to the overlap in time; and
> including (S26) the thus-adjusted associated pair in a group of mutually corresponding 2D trajectories.

11. The method of claim 10, further comprising:

> processing (S27a') each associated pair for detection of a first segment in the first 2D trajectory that is non-overlapping in time with the second 2D trajectory, or a second segment in the second 2D trajectory that is non-overlapping in time with the first 2D trajectory;
> generating (S27c') a new first 2D trajectory to represent the first segment and/or a new second 2D trajectory to represent the second segment; and
> including (S27c') the new first 2D trajectory in the first ensemble or the new second 2D trajectory in the second ensemble.

12. The method of claim 10 or 11, wherein said determining (S23) the associated pair comprises:

> determining (S30), for each second 2D trajectory in the candidate set, a value of a distance parameter to the first 2D trajectory in the candidate set;
> selecting (S31) a second 2D trajectory with a smallest value of the distance parameter; and
> designating (S32) the first 2D trajectory and the second 2D trajectory with the smallest value of the distance parameter as the associated pair.

13. The method of claim 12, wherein the distance parameter is given in a predefined direction on the event-based sensors, and wherein the predefined direction corresponds to a relative orientation of the event-based sensors.

14. A computer-readable medium comprising computer instructions (82A) which when executed by processor circuitry (81) causes the processor circuitry (81) to perform the method of any one of claims 1-13.

15. A system comprising:

> a scanning arrangement (20) which is operable to sweep one or more light beams (21) in a detection space defines by three space coordinates;
> a plurality of event-based sensors (30, 40, 50), which are operable to detect scattered light from the detection space, while the one or more light beams (21) are swept in the detection space by the scanning arrangement (20), and provide a respective data stream of events representing the scattered light detected by a respective event-based sensor among the plurality of event-based sensors (30, 40, 50); and
> a processing arrangement (60), which is configured to receive the respective data stream of events from the plurality of event-based sensors (30, 40, 50), said processing arrangement (60) being further configured to:

>> determine, based on the respective data stream of events, an ensemble of two-dimensional, 2D, trajectories ([CT1], [CT2]) that each represents a continuous movement of the scattered light on the respective event-based sensor;
>> determine, based on ensembles of 2D trajectories ([CT1], [CT2]) determined for the event-based sensors, one or more groups of mutually corresponding 2D trajectories on the plurality of event-based sensors (30, 40, 50);

determine, based on the one or more groups of mutually corresponding 2D trajectories, a set of 3D trajectories ([ST]) in the detection space, wherein each of the 3D trajectories defined by a parametric polynomial function of time for each of the space coordinates;

form an input dataset (IDS) comprising the set of 3D trajectories; and

operate an object recognition algorithm (63a) on the input dataset (IDS) for detection of one or more objects (2) in the detection space.

FIG. 1A

FIG. 1B

FIG. 1C

FIG. 1D

FIG. 2

M1

S10 — OPERATE SCANNING ARRANGEMENT TO SWEEP LIGHT BEAM(S) TO ILLUMINATE DETECTION SPACE

S11 — OPERATE EVENT CAMERAS TO DETECT SCATTERED LIGHT AND PROVIDE STREAMS OF EVENTS (ES1, ES2)

S12 — DETERMINE 2D TRAJECTORIES ([CT1], [CT2]) ON SENSOR ARRAYS BASED ON STREAMS OF EVENTS

S12a — DETECT EVENTS THAT ARE PROXIMATE IN TIME AND SENSOR LOCATION

S12b — DETERMINE 2D CURVE OF 2D TRAJECTORY BASED ON PROXIMATE EVENTS

S13 — DETERMINE CORRESPONDING (MATCHING) 2D TRAJECTORIES ACROSS EVENT CAMERAS

S14 — DETERMINE SET OF 3D TRAJECTORIES ([ST]) BASED ON GROUPS OF CORRESPONDING 2D TRAJECTORIES

S14a — GENERATE TIME-ALIGNED DATA SAMPLES ON 2D CURVES OF CORRESPONDING 2D TRAJECTORIES

S14b — OPERATE TRIANGULATION FUNCTION ON CORRESPONDING 2D TRAJECTORIES

S14c — INCLUDE FRAME NUMBER IN [ST]

S17 — INCREMENT FRAME NUMBER

S15 — GENERATE INPUT DATASET TO INCLUDE 3D TRAJECTORIES ([ST])

S15a — INCLUDE [ST] FROM PLURAL CONSECUTIVE FRAMES IN INPUT DATASET

S15b — GENERATE CONSECUTIVE INPUT DATASETS TO PARTIALLY OVERLAP

S16 — OPERATE OBJECT RECOGNITION ALGORITHM ON INPUT DATASET TO DETECT OBJECT(S) IN DETECTION SPACE

FIG. 3

FIG. 4A

S13+S14    [ST]    S15         S16         ODD

Time

FIG. 4B

FIG. 5

M2

S21 — DETECT OVERLAPPING 2D TRAJECTORIES FROM DIFFERENT EVENT CAMERAS

S22 — ADD OVERLAPPING 2D TRAJECTORIES TO RESPECTIVE CANDIDATE SET

S23 — DETERMINE ASSOCIATED PAIRS IN RESPECTIVE CANDIDATE SET BASED ON SPATIAL SELECTION CRITERION

S24 — ADJUST ASSOCIATED PAIR BY ASSIGNING COMMON START TIME AND COMMON END TIME

S25 — NORMALIZE ADJUSTED ASSOCIATED PAIR BY DURATION

S26 — INCLUDE ADJUSTED ASSOCIATED PAIR IN GROUP OF CORRESPONDING 2D TRAJECTORIES

FIG. 6A

FIG. 7

M2'

S21a' — SORT 2D TRAJECTORIES FOR EACH EVENT CAMERA BY TIME IN 2D ENSEMBLE

S21b' — SELECT EARLIEST 2D TRAJECTORY IN 2D ENSEMBLE

S21c' — PARSE 2D TRAJECTORIES FROM OTHER EVENT CAMERA FOR 2D TRAJECTORIES OVERLAPPING IN TIME

S22'

S23'

S24'

S25'

S26'

S27a' — DETECT NON-OVERLAPPING SEGMENT

S27b' — LENGTH > LIMIT?  N

Y

S27c' — GENERATE NEW 2D TRAJECTORY AND INCLUDE IN 2D ENSEMBLE

FIG. 6B

M3

S30 — DETERMINE, FOR FIRST 2D TRAJECTORY IN CANDIDATE SET, DISTANCE VALUE TO EACH SECOND 2D TRAJECTORY IN CANDIDATE SET

S31 — SELECT 2D TRAJECTORY WITH SMALLEST DISTANCE VALUE

S32 — DISTANCE < LIMIT?  N

Y

S33 — DESIGNATE FIRST 2D TRAJECTORY AND SELECTED 2D TRAJECTORY AS ASSOCIATED PAIR

FIG. 8

FIG. 9

FIG. 10

FIG. 11

FIG. 12A

FIG. 12B

M4

S41 — GENERATE [ST] BASED ON ES1, ES2 FROM EVENT CAMERAS AT DETECTION SPACE

S42 — GENERATE ODD BY USE OF MLM, BASED ON [ST]

S43 — PERFORM CLUSTRING ON [ST] TO DETERMINE 3D OBJECT(S)

S44 — GENERATE GTD BY USE OF 3D IMAGING SYSTEM AT DETECTION SPACE

S45 — ASSIGN LABEL(S) TO 3D OBJECT(S) BASED ON GTD

S46 — CALCULATE LOSS METRIC FOR ODD AND LABELED 3D OBJECT(S)

S47 — GENERATE PUD BASED ON LOSS METRIC

S48 — UPDATE MLM BASED ON PUD

FIG. 13

Europäisches
Patentamt

European
Patent Office

Office européen
des brevets

# EUROPEAN SEARCH REPORT

**Application Number**

EP 25 22 0829

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/169683 A1 (PADEN BRIAN ALEXANDER [US] ET AL) 1 June 2023 (2023-06-01) * paragraphs [0002] - [0005], [0035] - [0242] * * figures 1-12 * | 1-15 | INV. G01S17/42 G01S17/48 G01S17/89 H04N13/239 H04N13/243 H04N25/47 |
| A | EP 4 474 829 A1 (ETH ZUERICH [CH]) 11 December 2024 (2024-12-11) * paragraphs [0001] - [0107], [0129] - [0153] * * figures 1-6 * | 1-15 | |

**TECHNICAL FIELDS SEARCHED (IPC)**

G01S
H04N

The present search report has been drawn up for all claims

| Place of search | Date of completion of the search | Examiner |
|---|---|---|
| Munich | 30 April 2026 | Kruck, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 0829

This annex lists the patent family members relating to the patent documents cited in  the above-mentioned European search report.
The members are as contained in the European Patent Office EDP file on
The European Patent Office is in no way liable for these particulars which are merely given for the purpose of information.

30-04-2026

| Patent document cited in search report | | Publication date | Patent family member(s) | | Publication date |
|---|---|---|---|---|---|
| US 2023169683 | A1 | 01-06-2023 | US | 2023169683 A1 | 01-06-2023 |
| | | | WO | 2023096873 A1 | 01-06-2023 |
| EP 4474829 | A1 | 11-12-2024 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10261183 B